# EUROPEAN PATENT APPLICATION

(11) **EP 4 797 499 A1**
(43) Date of publication of application: **26.08.2026**
(21) Application number: 24890269.4
(22) Date of filing: 29.08.2024
(51) Int. Cl.: H02J 50/40

(54) **CHARGING METHOD, CHARGING DEVICE, ELECTRONIC DEVICE AND CHARGING SYSTEM**

(30) Priority: 14.11.2023 CN 202311520742
(71) Applicant: HUAWEI TECHNOLOGIES CO., LTD., Shenzhen 518129 (CN)
(72) Inventor: FU, Fangyang, Shenzhen, Guangdong 518129 (CN); SHEN, Yuxiang, Shenzhen, Guangdong 518129 (CN); JIANG, Lihong, Shenzhen, Guangdong 518129 (CN); PU, Tao, Shenzhen, Guangdong 518129 (CN)
(74) Representative: Gill Jennings & Every LLP
(86) International application number: PCT/CN2024/115630
(87) International publication number: WO 2025/102908

(57) **Abstract**

This application provides a charging method, a charging device, an electronic device, and a charging system, applied to the field of wireless charging technologies. The charging method may be applied to a first charging device in a charging system in which a plurality of charging devices are arranged. When the method is performed, the first charging device may obtain battery level information of an electronic device. Then, a first charging signal is output to the electronic device in response to the battery level information. A phase of the first charging signal transmitted to the electronic device is the same as a phase of at least one second charging signal transmitted to the electronic device. The at least one second charging signal is output by at least one second charging device. Because the phase of the first charging signal transmitted to the electronic device is the same as the phase of the at least one second charging signal transmitted to the electronic device, the first charging signal and the at least one second charging signal can achieve an optimal coherent superposition effect, thereby improving charging efficiency.

## Description

This application claims priority to Chinese Patent Application No. 202311520742.2, filed with the China National Intellectual Property Administration on November 14, 2023 and entitled "CHARGING METHOD, CHARGING DEVICE, ELECTRONIC DEVICE, AND CHARGING SYSTEM", which is incorporated herein by reference in its entirety.

### TECHNICAL FIELD

This application relates to the field of wireless charging technologies, and in particular, to a charging method, a charging device, an electronic device, and a charging system.

### BACKGROUND

With rapid development of internet of things (internet of things, IoT) technologies, wireless sensor technologies are widely applied to various fields. For example, the wireless sensor technologies such as radio frequency identification (radio frequency identification, RFID), internet of things (IoT), and environment sensing have been widely applied to fields such as logistics and warehouse management, industrial control, environment and building monitoring, medical monitoring, and smart home. Generally, a wireless terminal device used in the wireless sensor technologies is powered by a battery. However, due to a size limitation, the battery carried by the wireless terminal device usually has a very limited capacity, and cannot continuously support stable running of a component. Therefore, the battery needs to be frequently replaced manually, or the battery needs to be charged intermittently through a power supply to maintain normal running. This method increases operation costs and affects service stability. To resolve this problem, currently, many wireless terminal devices are charged through the wireless radio frequency charging technology. Considering that an energy fading rate of a radio frequency signal is high, performance improvement of charging the wireless terminal device through a single charging device is very limited. Therefore, a plurality of charging devices are usually selected to perform cooperative charging on the wireless terminal device. However, currently, efficiency is low when the plurality of charging devices perform cooperative charging on the wireless terminal device.

### SUMMARY

Embodiments of this application provide a charging method, a charging device, an electronic device, and a charging system, to resolve a problem that efficiency is low currently when a plurality of charging devices performs cooperative charging on a wireless terminal device.

To achieve the foregoing objective, the solution provided in embodiments of this application is as follows:
According to a first aspect, a charging method is provided. The charging method may be performed by a first charging device. A performing process is as follows: First, the first charging device obtains battery level information of an electronic device. Then, the first charging device outputs a first charging signal to the electronic device in response to the battery level information. A phase of the first charging signal transmitted to the electronic device is the same as a phase of at least one second charging signal transmitted to the electronic device. The at least one second charging signal is output by at least one second charging device. In this manner, when there are a plurality of charging devices in a scenario, phases of signals output by the first charging device and the at least one second charging device may be adjusted, so that the phase of the first charging signal output by the first charging device and transmitted to the electronic device is the same as the phase of the at least one second charging signal output by the at least one second charging device and transmitted to the electronic device, thereby performing coherent superposition charging on the electronic device. In addition, because the phase of the first charging signal transmitted to the electronic device is the same as the phase of the at least one second charging signal transmitted to the electronic device, the first charging signal and the at least one second charging signal can achieve an optimal coherent superposition effect, thereby improving charging efficiency.

In a possible implementation, the method further includes: obtaining channel state information between the electronic device and the first charging device, where the channel state information includes a transmission phase difference in a transmission channel between the electronic device and the first charging device; and outputting a third charging signal to the electronic device based on the transmission phase difference in response to the channel state information, where a phase of the third charging signal transmitted to the electronic device is the same as a phase of at least one fourth charging signal transmitted to the electronic device; and the at least one fourth charging signal is output by the at least one second charging device. In this manner, while ensuring the charging efficiency, the first charging device may adjust a charging signal to an optimal phase more quickly with reference to the transmission phase difference in the transmission channel between the electronic device and the first charging device, thereby further improving the charging efficiency of the electronic device. The foregoing process may be performed in another charging slot before a charging slot in which the first charging signal is located. Alternatively, the foregoing process may be performed in another charging slot after the charging slot in which the first charging signal is located. Alternatively, one of an output manner of the first charging signal and an output manner of the third charging signal may be selected for execution based on an actual scenario requirement.

In a possible implementation, the first charging device includes a phase shifter and an antenna coupled to the phase shifter. The step of outputting the first charging signal to the electronic device in response to the battery level information includes: sending a first indication signal to the phase shifter based on a phase shift amount of the phase shifter. The phase shift amount is determined based on the battery level information. The first indication signal indicates the phase shifter to perform phase shift processing on an input radio frequency signal and output the first charging signal. The phase shift amount determined through a relationship between the battery level information of the electronic device and a phase of the charging signal controls the phase shifter to perform phase shift processing on the input radio frequency signal, enabling more convenient control of the charging signal output by the first charging device.

In a possible implementation, the first charging device and the electronic device may perform signal transmission in a time division duplex manner. When outputting the first charging signal to the electronic device, the first charging device may output the first charging signal after a downlink communication slot between the first charging device and the electronic device, and stop outputting the first charging signal when the first charging device switches to an uplink communication slot. In this manner, the electronic device may be charged in a time period between the downlink communication slot and the uplink communication slot switched by the first charging device, thereby improving the charging efficiency.

In a possible implementation, the first charging device and the electronic device may perform signal transmission in a time division duplex manner. When outputting the first charging signal to the electronic device, the first charging device may alternatively synchronously output the first charging signal when downlink communication slot between the first charging device and the electronic device starts, and stop outputting the first charging signal when the first charging device switches to an uplink communication slot. In this manner, the first charging device may alternatively charge the electronic device in the downlink communication slot, thereby improving the charging efficiency.

In a possible implementation, the first charging device and the electronic device may perform signal transmission in a frequency division duplex manner. When outputting the first charging signal to the electronic device, the first charging device may continuously output the first charging signal between two communication slots between the first charging device and the electronic device. In this manner, when the first charging device and the electronic device perform signal transmission in the frequency division duplex manner, the first charging device may fully use a time period between two communication slots to continuously charge the electronic device, thereby improving charging efficiency.

In a possible implementation, the first charging device and the electronic device may perform signal transmission in a frequency division duplex manner. When outputting the first charging signal to the electronic device, the first charging device may continuously output the first charging signal in an entire transmission period between the first charging device and the electronic device. In this manner, when the first charging device communicates with the electronic device, the electronic device may also be charged through the first charging device, thereby improving charging efficiency.

In a possible implementation, the first charging device and the electronic device may perform signal transmission in a time division duplex manner. Based on this, a fifth charging signal may be further output to the electronic device after an uplink communication slot between the first charging device and the electronic device. A phase of the fifth charging signal transmitted to the electronic device is the same as a phase of at least one sixth charging signal transmitted to the electronic device. The at least one sixth charging signal is output by the at least one second charging device. In this manner, the first charging device may alternatively charge the electronic device after the uplink communication slot, thereby better ensuring a power consumption requirement of the electronic device.

In a possible implementation, before the first charging device obtains the battery level information of the electronic device, the method further includes: receiving a to-be-charged instruction from the electronic device. In the foregoing manner, the first charging device may output the charging signal to the electronic device after receiving the to-be-charged instruction from the electronic device, thereby reducing power consumption of the first charging device during running.

In a possible implementation, when the first charging device outputs the first charging signal to the electronic device, a charging priority of the electronic device may be first determined based on the battery level information. Then, the first charging signal is output to the electronic device based on the charging priority. In this manner, when there are a plurality of to-be-charged electronic devices within a charging area of the first charging device, the electronic devices may be sequentially charged based on the charging priority of each electronic device, to ensure that the electronic device can run normally and more timely charge an electronic device that needs to be charged.

According to a second aspect, a charging method is provided. The charging method may be applied to a to-be-charged electronic device. A performing process of the method includes: First, the electronic device receives a first charging signal output by the first charging device and at least one second charging signal output by at least one second charging device. A phase of the first charging signal transmitted to the electronic device is the same as a phase of at least one second charging signal transmitted to the electronic device. Then, an energy storage unit in the electronic device is charged based on the first charging signal and the at least one second charging signal.

In a possible implementation, the first charging device and the electronic device may perform signal transmission in a time division duplex manner. When receiving the first charging signal output by the first charging device, the electronic device may receive the first charging signal after a downlink communication slot between the first charging device and the electronic device, and stop receiving the first charging signal when the first charging device switches to an uplink communication slot.

In a possible implementation, the first charging device and the electronic device may perform signal transmission in a time division duplex manner. When receiving the first charging signal output by the first charging device, the electronic device may alternatively synchronously receive the first charging signal when a downlink communication slot between the first charging device and the electronic device starts, and stop receiving the first charging signal when the first charging device switches to an uplink communication slot.

In a possible implementation, the first charging device and the electronic device may perform signal transmission in a time division duplex manner. Based on this, the electronic device may further receive a fifth charging signal output by the first charging device after an uplink communication slot between the first charging device and the electronic device. A phase of the fifth charging signal transmitted to the electronic device is the same as a phase of at least one sixth charging signal transmitted to the electronic device. The at least one sixth charging signal is output by the at least one second charging device.

In a possible implementation, the first charging device and the electronic device may perform signal transmission in a frequency division duplex manner. When receiving the first charging signal output by the first charging device, the electronic device may continuously receive the first charging signal between two communication slots of the first charging device and the electronic device.

In a possible implementation, the first charging device and the electronic device may perform signal transmission in a frequency division duplex manner. When receiving the first charging signal output by the first charging device, the electronic device may continuously receive the first charging signal in an entire transmission period between the first charging device and the electronic device.

According to a third aspect, a charging device is provided. The charging device includes a processor and an antenna. The processor may obtain battery level information of an electronic device, and then, output a first charging signal to the antenna in response to the battery level information. The antenna is configured to output the first charging signal to the electronic device. A phase of the first charging signal transmitted to the electronic device is the same as a phase of at least one second charging signal transmitted to the electronic device. The at least one second charging signal is output by at least one second charging device.

According to a fourth aspect, an electronic device is provided. The electronic device includes an antenna, a charging circuit, and an energy storage unit. The charging circuit is coupled to the antenna, and the energy storage unit is coupled to the charging circuit. The antenna may receive a first charging signal output by a first charging device and at least one second charging signal output by at least one second charging device. A phase of the first charging signal transmitted to the electronic device is the same as a phase of the at least one second charging signal transmitted to the electronic device. The charging circuit may charge the energy storage unit based on the first charging signal and the at least one second charging signal.

According to a fifth aspect, a charging system is provided. The charging system includes a first charging device and an electronic device. The first charging device may perform the charging method in any possible implementation of the first aspect. The electronic device is connected to the first charging device, and may perform the charging method in any possible implementation of the second aspect.

For technical effects that can be brought by the second aspect to the fifth aspect, refer to related descriptions of the first aspect. Details are not described herein again.

### BRIEF DESCRIPTION OF DRAWINGS

FIG. 1 is a diagram of a structure of a wireless radio frequency communication system;
FIG. 2 is a diagram of a structure of another wireless radio frequency communication system;
FIG. 3 is a diagram of a structure of a charging system according to an embodiment of this application;
FIG. 4 is a diagram of a structure of another charging system according to an embodiment of this application;
FIG. 5 is a diagram of a structure of cooperative charging according to an embodiment of this application;
FIG. 6 is a flowchart of a charging method according to an embodiment of this application;
FIG. 7 is a flowchart of another charging method according to an embodiment of this application;
FIG. 8 is a flowchart of another charging method according to an embodiment of this application;
FIG. 9 is a diagram of a charging time sequence according to an embodiment of this application;
FIG. 10 is a diagram of another charging time sequence according to an embodiment of this application;
FIG. 11 is a diagram of still another charging time sequence according to an embodiment of this application;
FIG. 12 is a diagram of still another charging time sequence according to an embodiment of this application; and
FIG. 13 is diagram of comparison results of charging efficiency according to an embodiment of this application.

### DESCRIPTION OF EMBODIMENTS

The following describes technical solutions in embodiments of this application with reference to accompanying drawings in embodiments of this application.

In descriptions of this application, unless otherwise specified, "/" means an "or" relationship between associated objects. For example, A/B may represent A or B. In this application, "and/or" describes only an association relationship between the associated objects and indicates that three relationships may exist. For example, A and/or B may indicate the following cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof indicates any combination of these items, and includes a singular item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity and an execution sequence, and the terms such as "first" and "second" do not limit a definite difference. In addition, in embodiments of this application, terms such as "example" or "for example" are used to represent giving an example, an illustration, or a description. In embodiments of this application, any embodiment or design scheme described with "example" or "for example" should not be explained as being more preferred or having more advantages than another embodiment or design scheme. To be precise, the terms such as "example" or "for example" are used to present a related concept in a specific manner for ease of understanding.

The following describes this application in detail with reference to the accompanying drawings and embodiments.

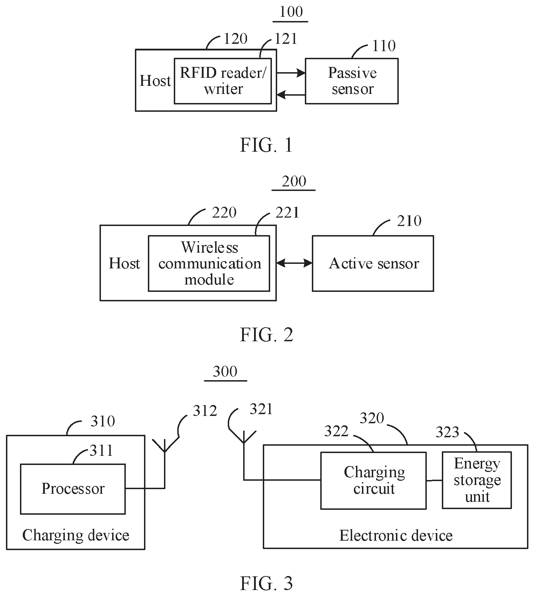

Currently, sensors in the field of internet of things technologies are generally classified into a passive sensor and an active sensor. As shown in FIG. 1, a passive sensor 110 in a wireless radio frequency communication system 100 that uses the passive sensor 110 mostly performs communication through the RFID technology. When a host 120 needs to communicate with the passive sensor 110, the passive sensor 110 needs to be activated through an RFID reader/writer 121. However, the passive sensor 110 has a high activation level, a short communication distance, and poor reliability. To improve the communication distance and the reliability, as shown in FIG. 2, a wireless radio frequency communication system 200 that uses an active sensor 210 is selected in many application scenarios. When the active sensor 210 is used, a host 220 may directly communicate with the active sensor 210 through an arranged wireless communication module 221. However, many existing active sensors 210 are powered by a battery. In actual use, the battery needs to be frequently replaced manually, or the battery needs to be charged intermittently through a power supply to maintain normal running. This method increases operation costs and affects service stability.

To resolve this problem, as shown in FIG. 3, some solutions propose a charging system 300 that charges an electronic device through the wireless radio frequency charging technology. The charging system 300 includes a charging device 310 and an electronic device 320 that can be wirelessly charged. The charging device 310 includes a processor 311 and an antenna 312. When the electronic device 320 needs to be charged, the processor 311 may output a charging signal to the antenna 312, and the charging signal may be output to the electronic device 320 through the antenna 312. The electronic device 320 includes a terminal antenna 321, a charging circuit 322, and an energy storage unit 323. The energy storage unit 323 is coupled to the terminal antenna 321 through the charging circuit 322. When the terminal antenna 321 receives the charging signal, the charging signal may be converted into a direct current energy signal through the charging circuit 322 to charge the energy storage unit 323. In the foregoing implementation process, the energy storage unit 323 may be a capacitor, a battery, or the like. For example, the processor 311 may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processing (digital signal processor, DSP) circuit, a microcontroller unit (microcontroller unit, MCU), a programmable controller (programmable logic device, PLD), or another integrated chip.

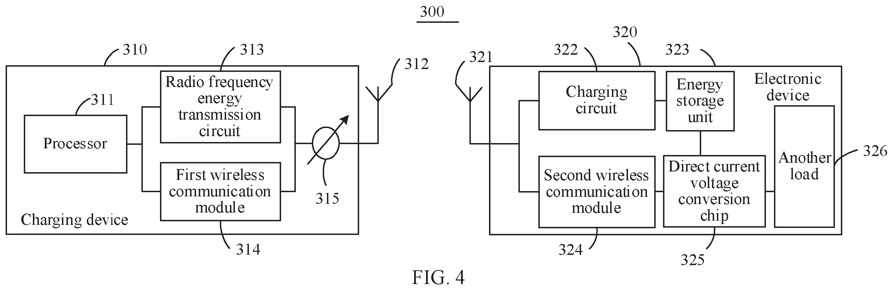

In some examples, as shown in FIG. 4, the charging device 310 may further include a radio frequency energy transmission circuit 313. The radio frequency energy transmission circuit 313 is separately coupled to the processor 311 and the antenna 312. The radio frequency energy transmission circuit 313 may include a digital intermediate frequency processing unit, a digital-to-analog converter, a frequency converter, a power amplifier, and a filter that are sequentially connected. The charging signal output by the processor 311 is converted into a digital signal through the digital intermediate frequency processing unit. The digital signal may be converted into a radio frequency signal through the digital-to-analog converter. The radio frequency signal is sequentially processed by the frequency converter, the power amplifier, and the filter to obtain a charging signal that needs to be output. The charging signal may be sent to the antenna for output. In the foregoing manner, a frequency and power of the charging signal may be adjusted based on an actual requirement. Certainly, the foregoing radio frequency energy transmission circuit is merely an example provided in this embodiment of this application. In actual manufacturing or use, the foregoing radio frequency energy transmission circuit 313 may further include another component. This is not specifically limited in embodiments of this application.

In some examples, as shown in FIG. 4, the charging device 310 may further include a first wireless communication module 314. The first wireless communication module 314 is separately coupled to the processor 311 and the antenna 312. When the charging device 310 needs to communicate with the electronic device 320, the processor 311 may receive and send, through the first wireless communication module 314 and the antenna 312, a wireless communication signal for communicating with the electronic device 320.

In some examples, still as shown in FIG. 4, a phase shifter 315 may be further arranged between the radio frequency energy transmission circuit 313, the first wireless communication module 314, and the antenna 312. The phase shifter 315 may be further coupled to the processor 311. When a charging signal needs to be output, the processor 311 may control, based on a sent indication signal, the phase shifter 315 to perform phase shift processing on an input radio frequency signal, to output a charging signal of a specific phase from the antenna 312.

In some examples, as shown in FIG. 4, the electronic device 320 may further include a second wireless communication module 324 and a direct current voltage conversion chip 325. The energy storage unit 323 is coupled to the second wireless communication module 324 through the direct current voltage conversion chip 325. Electric energy stored in the energy storage unit 323 may be converted to a proper voltage through the direct current voltage conversion chip 325 to supply power to the second wireless communication module 324.

Optionally, still as shown in FIG. 4, the electronic device 320 may further include another load 326. The energy storage unit 323 is further coupled to the another load 326 through the direct current voltage conversion chip 325. The electric energy stored in the energy storage unit 323 may be converted to a proper voltage through the direct current voltage conversion chip 325 to supply power to the another load 326. The another load 326 includes a sensor and various components arranged in the electronic device.

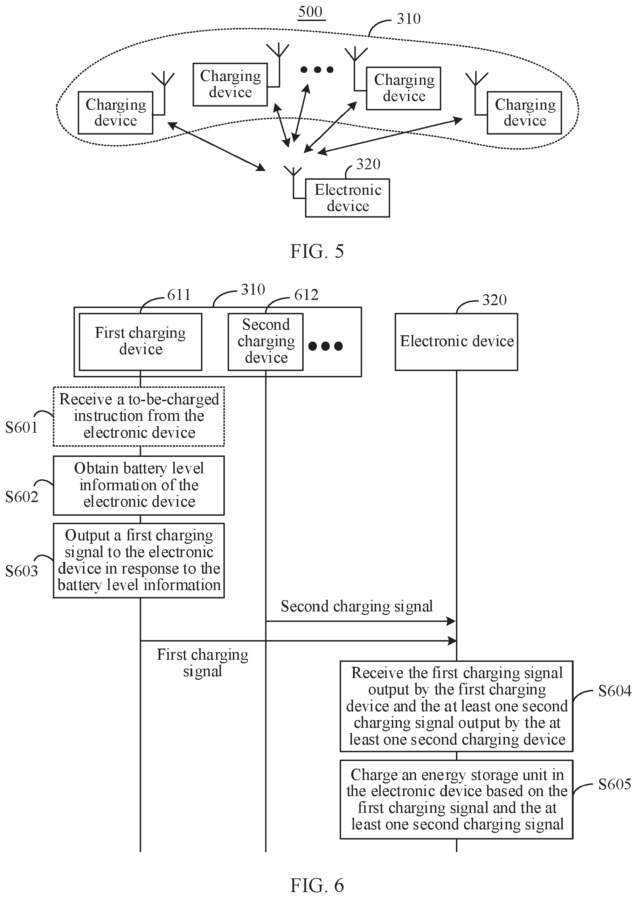

Although the electronic device 320 can be charged through the foregoing charging device 310, receive power of a radio frequency charging signal sent by a single charging device 310 to an electronic device 10 meters away is only dozens of microwatts. The power may fail to meet an energy consumption requirement of a future high-performance wireless sensor. Although some solutions propose some physical layer technologies, for example, using a multi-antenna system and a more efficient charging circuit, to improve transmission efficiency. However, because an energy fading rate of a radio frequency signal is high, an overall improvement effect on transmission performance of a single charging device 310 is very limited. When facing a power supply problem in a large-scale wireless network, it is especially necessary to use a plurality of charging devices to perform cooperative charging. To implement cooperative power-on of the electronic device 320, as shown in FIG. 5, an embodiment of this application provides a charging system 500. The charging system 500 includes a plurality of charging devices 310 shown in FIG. 3 or FIG. 4, and at least one electronic device 320 shown in FIG. 3 or FIG. 4. In the charging system 500, each charging device 310 may output a charging signal to a to-be-charged electronic device 320. However, when a plurality of charging devices are used for joint transmission, the foregoing charging system 500 usually charges the electronic device 320 in a point-to-point transmission manner, and does not fully explore a broadcast feature of a radio frequency signal, and ignores a superposition effect of charging signals of the plurality of charging devices on one electronic device. Therefore, a lot of transmission energy is wasted. Although some wireless radio frequency charging solutions propose a real-time resource allocation solution based on channel state information, for example, using energy beamforming and frequency domain power allocation, to improve energy efficiency. However, these solutions still have a problem of low charging efficiency.

To resolve the foregoing problem, as shown in FIG. 6, an embodiment of this application provides a charging method. The charging method may be applied to the charging system 500 shown in FIG. 5. For ease of differentiation, in this embodiment of this application, the plurality of charging devices 310 in the charging system 500 are classified into a first charging device 611 and at least one second charging device 612. The first charging device 611 may be any charging device in the charging system 500. This is not specifically limited in embodiments of this application. In the following embodiment of this application, the charging method is described by using a perspective of the first charging device 611 as an example. A performing process of the charging method includes the following steps.

S601: The first charging device receives a to-be-charged instruction from an electronic device.

A step of obtaining battery level information of the electronic device 320 is performed after the first charging device 611 receives the to-be-charged instruction from the electronic device 320, so that standby time of the first charging device 611 is shortened, thereby reducing power consumption of the first charging device 611.

S602: The first charging device obtains the battery level information of the electronic device.

In an example, after the first charging device 611 establishes a communication connection to the electronic device 320, the first charging device 611 may first send a first communication signal to the electronic device 320. After receiving the first communication signal, the electronic device 320 may send the battery level information of the electronic device to the first charging device 611 based on a feedback second communication signal.

In another example, after the first charging device 611 establishes a communication connection to the electronic device 320, the electronic device 320 may actively send a communication signal to the first charging device 611. The communication signal may carry the battery level information of the electronic device 320.

S603: The first charging device outputs a first charging signal to the electronic device in response to the battery level information.

A phase of the first charging signal transmitted to the electronic device 320 is the same as a phase of at least one second charging signal transmitted to the electronic device 320. The at least one second charging signal is output by the at least one second charging device 612. In this manner, the phase of the first charging signal output by the first charging device 611 and transmitted to the electronic device 320 is the same as the phase of the at least one second charging signal output by the at least one second charging device 612 and transmitted to the electronic device 320. Therefore, coherent superposition charging may be performed on the electronic device 320 based on the first charging signal and the at least one second charging signal. In addition, because the phase of the first charging signal transmitted to the electronic device 320 is the same as the phase of the at least one second charging signal transmitted to the electronic device 320, the first charging signal and the at least one second charging signal can achieve an optimal coherent superposition effect, thereby improving charging efficiency.

In the foregoing implementation process, the first charging device 611 may be a charging device that is in the charging system and that first establishes a communication connection to the electronic device 320. The at least one second charging device 612 is another charging device in the charging system other than the first charging device 611.

In some implementation solutions, when outputting the first charging signal to the electronic device 320 in response to the battery level information, the first charging device 611 may send a first indication signal to a phase shifter based on a phase shift amount of the phase shifter. The first indication signal indicates the phase shifter to perform phase shift processing on an input radio frequency signal, to adjust a phase of the input radio frequency signal, so as to output the first charging signal from an antenna. The phase shift amount may be determined based on the battery level information.

For example, after the first charging device 611 and the at least one second charging device 612 are arranged in an application scenario, the electronic device 320 may first separately perform pairing with the first charging device 611 and each second charging device 612. For the pairing, refer to pairing manners of various wireless communication technologies such as Bluetooth (Bluetooth), Zigbee (Zigbee), wireless fidelity (Wi-Fi), and Nearlink (Nearlink). Details are not described in this embodiment of this application. Then, a correspondence between a battery level of the electronic device 320 that needs to be charged and a phase of the charging signal output by the first charging device 611 is tested. Finally, a lookup table between the phase shift amount of the phase shifter in the first charging device 611 and the battery level information of the electronic device 320 is constructed based on the correspondence; or a calculation manner between the phase shift amount of the phase shifter in the first charging device 611 and the battery level information of the electronic device 320 is determined based on the correspondence. When the first charging device 611 is formally put into use, if the electronic device 320 enters a coverage area of the first charging device 611, the electronic device 320 may establish a communication connection to the first charging device 611. Then, the first charging device 611 may regularly or periodically obtain the battery level information of the electronic device 320. Then, the phase shift amount of the phase shifter is determined from the lookup table based on the battery level information. Alternatively, the phase shift amount of the phase shifter is calculated in the determined calculation manner. Finally, the first indication signal is sent to the phase shifter based on the phase shift amount. To ensure that the phase of the charging signal output by the first charging device 611 and transmitted to the electronic device 320 is the same as the phase of the charging signal output by the at least one of the second charging device 612 and transmitted to the electronic device 320, a lookup table between the phase shift amount of the phase shifter and the battery level information of the electronic device 320 may be constructed for each second charging device 612 based on a location relationship between each second charging device 612 and the first charging device 611. Alternatively, a calculation manner between the phase shift amount of the phase shifter in each second charging device 612 and the battery level information of the electronic device 320 is determined based on the location relationship. Then, when each second charging device 612 is formally put into use, if the electronic device 320 enters a coverage area of a specific second charging device 612, the electronic device 320 may establish a communication connection to the second charging device 612. Then, the second charging device 612 may regularly or periodically obtain the battery level information of the electronic device 320. Then, the phase shift amount of the phase shifter is determined from the lookup table based on the battery level information. Alternatively, the phase shift amount of the phase shifter is calculated in the determined calculation manner.

In some application scenarios (for example, a smart home scenario or an industrial scenario), it is considered that a to-be-charged electronic device 320 may be in a moving state, and the first charging device 611 is a charging device that first establishes a communication connection to the electronic device 320 in the charging system. Therefore, each charging device in the charging system may store a plurality of lookup tables, or store a plurality of calculation manners between the phase shift amount of the phase shifter in the charging device and the battery level information of the electronic device 320. In addition, the first charging device 611 and each second charging device 612 in the charging system may also establish a communication connection with each other. Before the first charging device 611 outputs the first charging signal to the electronic device 320 in response to the obtained battery level information, each second charging device 612 may be notified. If the electronic device 320 is also located within a coverage area of a specific second charging device 612, after obtaining the battery level information of the electronic device 320, the second charging device 612 may determine the phase shift amount of the phase shifter from a corresponding lookup table based on a location relationship between the second charging device 612 and the first charging device 611. Alternatively, the phase shift amount of the phase shifter is determined in a corresponding calculation manner.

Certainly, the foregoing is merely an example implementation solution provided in this embodiment of this application, and the phase shift amount of the phase shifter may alternatively be determined in another manner.

In an implementation solution, it is considered that a transmission distance between the charging device and the to-be-charged electronic device 320 leads to a decrease in an amplitude of the charging signal, consequently affecting a charging effect. Therefore, the first charging device 611 and each second charging device 612 may obtain the battery level information of the electronic device 320 a plurality of times. Then, the amplitude and the phase of the output charging signal are adjusted based on two consecutive pieces of battery level information, until an optimal charging effect of the electronic device 320 is achieved. If a later battery level is lower than a previous battery level, the amplitudes of the charging signals output by the first charging device 611 and the second charging device 612 may be increased. If the later battery level is higher than the previous battery level a plurality of times, and an increase in a battery level each time is greater than an increase in the battery level in previous time, but a maximum charging rate is not reached, the amplitudes of the charging signals output by the first charging device 611 and the second charging device 612 may be further increased. If the later battery level is higher than the previous battery level, but a charging rate decreases, the phases of the charging signals output by the first charging device 611 and each second charging device 612 may be adjusted.

S604: The electronic device receives the first charging signal output by the first charging device and the at least one second charging signal output by the at least one second charging device.

The electronic device 320 may receive, through the antenna, the first charging signal output by the first charging device 611 and the at least one second charging signal output by the at least one second charging device 612.

S605: The electronic device charges an energy storage unit in the electronic device based on the first charging signal and the at least one second charging signal.

After coherent superposition is performed on the first charging signal and the at least one second charging signal output by the at least one second charging device 612 that are received by the antenna, the energy storage unit may be charged through a charging circuit in the electronic device 320.

In an example, the charging circuit may include a rectifier circuit. The rectifier circuit may convert the charging signal into a direct current signal, and then charge the energy storage unit.

In another example, the charging circuit may further include a filter circuit. The filter circuit may be selectively arranged at both an input end and an output end of the rectifier circuit, to charge the energy storage unit more stably.

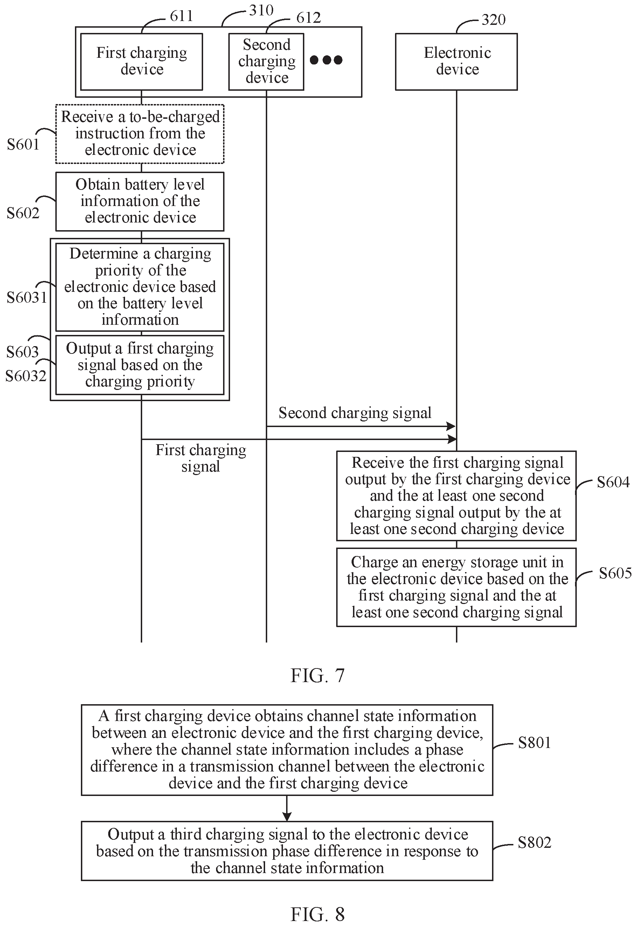

In some implementation solutions, as shown in FIG. 7, when there are a plurality of electronic devices 320 located within the coverage area of the first charging device 611, S603 may be performed in the following manner.

S6031: Determine charging priorities of the electronic devices based on the battery level information.

In an example, when the charging priorities of the electronic devices 320 are determined based on the battery level information, the priorities may be sorted in descending order based on remaining battery levels of the electronic devices 320. A charging priority of an electronic device 320 with a smaller remaining battery level is higher. During charging, an electronic device 320 with a highest charging priority is preferentially charged.

The foregoing manner of determining the charging priorities is merely an example provided in this embodiment of this application. In actual execution, another factor that affects the charging priorities may be further added with reference to an actual use scenario, for example, an ambient temperature, a transmission distance, and the like. This is not specifically limited in embodiments of this application.

S6032: Output the first charging signal based on the charging priorities.

The first charging device 611 may charge the electronic device 320 with the highest priority based on the determined charging priorities. In this case, to ensure normal running of another electronic device 320, the second charging devices 612 may be further allocated based on the charging priorities of the electronic devices 320. A specific allocation manner may be adjusted based on an actual requirement. This is not specifically limited in embodiments of this application.

In some implementation solutions, as shown in FIG. 8, the foregoing charging method may be further performed in the following manner.

S801: A first charging device obtains channel state information between an electronic device and the first charging device.

The channel state information includes a transmission phase difference in a transmission channel between the electronic device 320 and the first charging device 611.

In an example, after the first charging device 611 establishes a communication connection to the electronic device 320, the first charging device 611 may first send a first test signal to the electronic device 320. Then, after receiving the test signal, the electronic device 320 sends a feedback signal to the first charging device 611. Finally, the first charging device 611 compares the feedback signal with a preset reference signal, to determine the channel state information between the electronic device 320 and the first charging device 611. The reference signal is an original signal output by the antenna of the electronic device 320. Because the transmission channel between the first charging device 611 and the electronic device 320 is affected by a transmission distance, there is a phase difference between the feedback signal actually received by the first charging device 611 and the original signal output by the antenna of the electronic device 320. Therefore, the phase difference between the two signals may be obtained by comparing the two signals, to determine the channel state information between the electronic device 320 and the first charging device 611.

In another example, after a communication connection is established between the first charging device 611 and the electronic device 320, the electronic device 320 may alternatively actively send a test signal to the first charging device 611. The first charging device 611 may compare the received test signal with a preset reference signal to obtain a phase difference between the two signals, to determine the channel state information between the electronic device 320 and the first charging device 611.

S802: Output a third charging signal to the electronic device based on the transmission phase difference in response to the channel state information.

A phase of the third charging signal transmitted to the electronic device 320 is the same as a phase of at least one fourth charging signal transmitted to the electronic device 320. The at least one fourth charging signal is output by the at least one second charging device 612.

In some implementation solutions, it is considered that the transmission distance between the first charging device 611 and the electronic device 320 leads to a decrease in an amplitude of the charging signal. Therefore, the foregoing channel state information may further include a signal amplitude loss existing in the transmission channel between the first charging device 611 and the electronic device 320. When the third charging signal is output, an amplitude of the third charging signal may also be increased based on the signal amplitude loss.

In the foregoing implementation process, S801 and S802 in FIG. 8 and S602 and S603 in FIG. 5 or FIG. 6 are parallel solutions. In actual use, one of the solutions may be selected for performing. However, in some scenarios, S801 and S802 may be performed before S602, or may be performed after S603. In this manner, the charging signal can be adjusted to an optimal phase more accurately.

Further, to better improve charging efficiency of the electronic device 320, in embodiments of this application, based on any charging method in FIG. 6 to FIG. 8, an output time sequence of the charging signal is further specifically designed. Specific content of the output time sequence includes examples of the following several embodiments.

### Embodiment 1

In an implementation solution, the first charging device 611 and the electronic device 320 may perform signal transmission in a time division duplex manner. When outputting the first charging signal to the electronic device 320, the first charging device 611 may output the first charging signal after a downlink communication slot between the first charging device 611 and the electronic device 320, and stop outputting the first charging signal when the first charging device 611 switches to an uplink communication slot. In addition, the first charging device 611 may output a fifth charging signal to the electronic device 320 after the uplink communication slot between the first charging device 611 and the electronic device 320. A phase of the fifth charging signal transmitted to the electronic device 320 is the same as a phase of at least one sixth charging signal transmitted to the electronic device 320. The at least one sixth charging signal is output by the at least one second charging device 612.

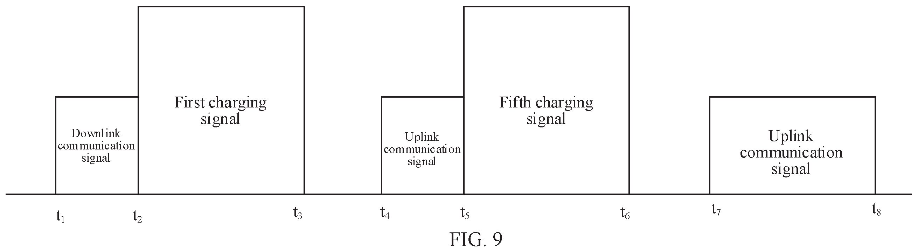

For example, as shown in FIG. 9, when the first charging device 611 and the electronic device 320 perform signal transmission in the time division duplex manner, the first charging device 611 may transmit a downlink communication signal to the electronic device 320 in a downlink communication slot (a moment t₁ to a moment t₂). The downlink communication signal may be a broadcast signal or a control signal, for example, the foregoing first communication signal. Then, the first charging signal is output in a time period (that is, the moment t₂ to a moment t₃) after the downlink communication slot (that is, after the moment t₂) to a moment at which the first charging device 611 switches to an uplink communication slot (that is, the moment t₃). Then, the first charging device 611 switches from the downlink communication slot to the uplink communication slot between the moment t₃ and a moment t₄. Then, the first charging device 611 receives, in the uplink communication slot (the moment t₄ to a moment t₅), an uplink communication signal sent by the electronic device 320. The communication signal includes identity information of the electronic device 320, information detected by a sensor, the battery level information of the electronic device 320, and the like. Then, the first charging device 611 outputs the fifth charging signal between the moment t₅ and a moment t₆. Then, the first charging device 611 and the electronic device 320 perform slot switching between the moment t₆ and a moment t₇. Finally, another uplink communication signal is sent from the electronic device 320 to the first charging device 611 between the moment t₇ and a moment t₈.

### Embodiment 2

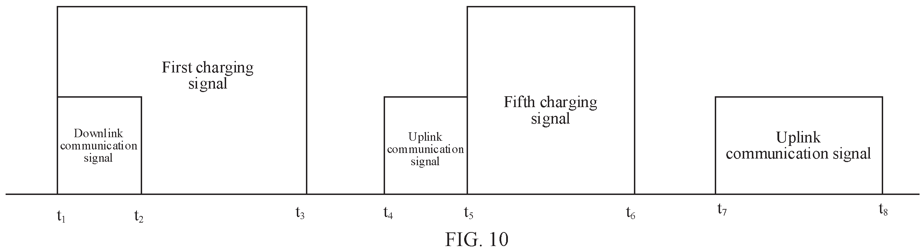

In an implementation solution, when the first charging device 611 and the electronic device 320 may perform signal transmission in the time division duplex manner, the first charging device 611 may synchronously output the first charging signal when a downlink communication slot between the first charging device 611 and the electronic device 320 starts, and stop outputting the first charging signal when the first charging device 611 switches to an uplink communication slot. For example, as shown in FIG. 10, the first charging device 611 may transmit a downlink communication signal to the electronic device 320 in the downlink communication slot (a moment t₁ to a moment t₂). In addition, the first charging device 611 outputs the first charging signal between the moment t₁ and a moment t₃. A subsequent process is similar to that in FIG. 9. Details are not described herein again.

### Embodiment 3

In an implementation solution, the first charging device 611 and the electronic device 320 may perform signal transmission in a frequency division duplex manner. The first charging device 611 may continuously output the first charging signal between two communication slots of the first charging device 611 and the electronic device 320.

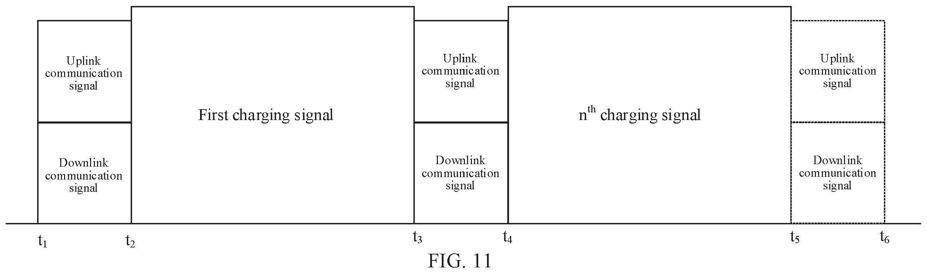

For example, as shown in FIG. 11, the first charging device 611 and the electronic device 320 may perform uplink and downlink communication signal transmission in a first uplink and downlink communication slot (a moment t₁ to a moment t₂), that is, the first charging device 611 may send the downlink communication signal to the electronic device 320, and the electronic device 320 may also send the uplink communication signal to the first charging device 611. Then, the first charging device 611 may continuously output the first charging signal to the electronic device 320 in a time period (the moment t₂ to a moment t₃) between the first uplink and downlink communication slot and a second uplink and downlink communication slot. Then, the first charging device 611 may perform uplink and downlink communication signal transmission to the electronic device 320 in the second uplink and downlink communication slot (the moment t₃ to a moment t₄). Finally, the first charging device 611 may continuously output another charging signal (an n^{th} charging signal) to the electronic device 320 in a time period (the moment t₄ to a moment t₅) between the second uplink and downlink communication slot and a third uplink and downlink communication slot (the moment t₅ to a moment t₆).

### Embodiment 4

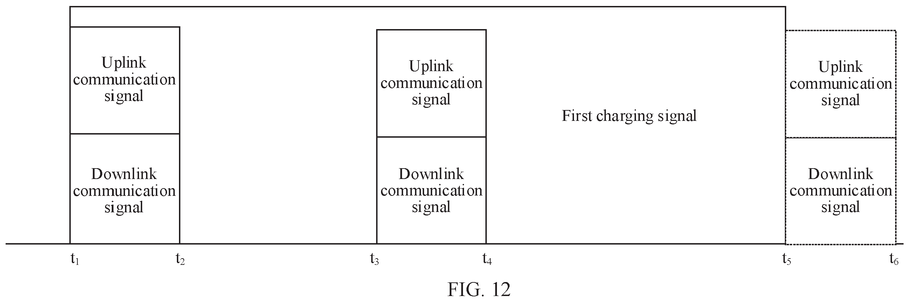

In an implementation solution, when the first charging device 611 and the electronic device 320 perform signal transmission in a frequency division duplex manner, the first charging device 611 may alternatively continuously output the first charging signal in an entire transmission period between the first charging device 611 and the electronic device 320. For example, as shown in FIG. 12, the first charging device 611 and the electronic device 320 may perform uplink and downlink communication signal transmission respectively in a first uplink and downlink communication slot (a moment t₁ to a moment t₂), a second uplink and downlink communication slot (a moment t₃ to a moment t₄), and a third uplink and downlink communication slot (a moment t₅ to a moment t₆). In addition, the first charging device 611 may output the first charging signal in an entire transmission period (the moment t₁ to the moment t₆).

In the foregoing implementation process, the third uplink and downlink communication slot (the moment t₅ to the moment t₆) may be selectively set based on an actual requirement.

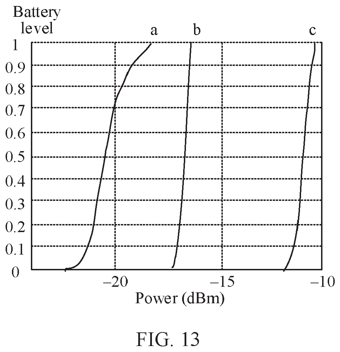

Further, to verify reliability of the charging method provided in embodiments of this application, in this embodiment of this application, a plurality of charging manners are further compared through a charging system in which four charging devices 310 and one electronic device 320 are arranged. The used charging manner includes: charging by a single charging device (a in FIG. 13), incoherent charging by the four charging devices (b in FIG. 13), and coherent charging by the four charging devices by using the charging method (c in FIG. 13) provided in embodiments of this application. A final verification result is shown in FIG. 13. It can be learned from FIG. 13 that both charging efficiency and charging electric energy of the incoherent charging by the four charging devices are higher than those of charging by the single charging device. Charging efficiency and charging electric energy of the charging method provided in this application are further higher than those of the incoherent charging manner of the four charging devices. Therefore, the charging method provided in embodiments of this application significantly improves the charging efficiency.

It should be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

A person of ordinary skill in the art may be aware that, modules and algorithm steps in the examples described with reference to embodiments disclosed in this specification can be implemented by electronic hardware or a combination of computer software and electronic hardware. Whether the functions are performed by hardware or software depends on specific applications and design constraints of the technical solutions. A person skilled in the art may use different methods to implement the described functions for each particular application, but it should not be considered that, the implementation goes beyond the protection scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments of this application, it should be understood that the disclosed system, device, and method may be implemented in another manner. For example, the described device embodiment is merely an example. For example, the division of the modules is merely logical function division and there may be another division manner in actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one device, or may be distributed on a plurality of devices. A part or all of the modules may be selected based on actual requirements to achieve the objectives of the solutions of embodiments.

In addition, functional modules in embodiments of this application may be integrated into one device, or each of the modules may exist alone physically, or two or more modules may be integrated into one device.

All or a part of the foregoing embodiments may be implemented through software, hardware, firmware, or any combination thereof. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging method, applied to a first charging device, wherein the method comprises:
obtaining battery level information of an electronic device;
outputting a first charging signal to the electronic device in response to the battery level information, wherein a phase of the first charging signal transmitted to the electronic device is the same as a phase of at least one second charging signal transmitted to the electronic device; and the at least one second charging signal is output by at least one second charging device.

2. The method according to claim 1, wherein the method further comprises:
obtaining channel state information between the electronic device and the first charging device, wherein the channel state information comprises a transmission phase difference in a transmission channel between the electronic device and the first charging device; and
outputting a third charging signal to the electronic device based on the transmission phase difference in response to the channel state information, wherein a phase of the third charging signal transmitted to the electronic device is the same as a phase of at least one fourth charging signal transmitted to the electronic device; and the at least one fourth charging signal is output by the at least one second charging device.

3. The method according to claim 1 or 2, wherein the first charging device comprises a phase shifter and an antenna coupled to the phase shifter; and the step of outputting the first charging signal to the electronic device in response to the battery level information comprises:
sending a first indication signal to the phase shifter based on a phase shift amount of the phase shifter, wherein the phase shift amount is determined based on the battery level information, and the first indication signal indicates the phase shifter to perform phase shift processing on an input radio frequency signal and output the first charging signal.

4. The method according to any one of claims 1 to 3, wherein the first charging device and the electronic device perform signal transmission in a time division duplex manner; and the step of outputting the first charging signal to the electronic device in response to the battery level information comprises:
outputting the first charging signal after a downlink communication slot between the first charging device and the electronic device, and stopping outputting the first charging signal when the first charging device switches to an uplink communication slot.

5. The method according to any one of claims 1 to 3, wherein the first charging device and the electronic device perform communication in a time division duplex manner; and the step of outputting the first charging signal to the electronic device in response to the battery level information comprises:
synchronously outputting the first charging signal when a downlink communication slot between the first charging device and the electronic device starts, and stopping outputting the first charging signal when the first charging device switches to an uplink communication slot.

6. The method according to any one of claims 1 to 3, wherein the first charging device and the electronic device perform signal transmission in a frequency division duplex manner; and the step of outputting the first charging signal to the electronic device in response to the battery level information comprises:
continuously outputting the first charging signal between two communication slots of the first charging device and the electronic device.

7. The method according to any one of claims 1 to 3, wherein the first charging device and the electronic device perform signal transmission in a frequency division duplex manner; and the step of outputting the first charging signal to the electronic device in response to the battery level information comprises:
continuously outputting the first charging signal in an entire transmission period between the first charging device and the electronic device.

8. The method according to any one of claims 1 to 5, wherein the first charging device and the electronic device perform signal transmission in the time division duplex manner, and the method further comprises:
outputting a fifth charging signal to the electronic device after the uplink communication slot between the first charging device and the electronic device, wherein a phase of the fifth charging signal transmitted to the electronic device is the same as a phase of at least one sixth charging signal transmitted to the electronic device; and the at least one sixth charging signal is output by the at least one second charging device.

9. The method according to any one of claims 1 to 8, wherein before obtaining the battery level information of the electronic device, the method further comprises: receiving a to-be-charged instruction from the electronic device.

10. The method according to any one of claims 1 to 9, wherein the step of outputting the first charging signal to the electronic device in response to the battery level information further comprises:
determining a charging priority of the electronic device based on the battery level information; and
outputting the first charging signal based on the charging priority.

11. A charging method, applied to an electronic device, wherein the method comprises:
receiving a first charging signal output by a first charging device and at least one second charging signal output by at least one second charging device, wherein a phase of the first charging signal transmitted to the electronic device is the same as a phase of the at least one second charging signal transmitted to the electronic device; and
charging an energy storage unit in the electronic device based on the first charging signal and the at least one second charging signal.

12. The method according to claim 11, wherein the first charging device and the electronic device perform signal transmission in a time division duplex manner; and the step of receiving the first charging signal output by the first charging device and the at least one second charging signal output by the at least one second charging device comprises:
receiving the first charging signal after a downlink communication slot between the first charging device and the electronic device, and stopping receiving the first charging signal when the first charging device switches to an uplink communication slot.

13. The method according to claim 11, wherein the first charging device and the electronic device perform signal transmission in a time division duplex manner; and the step of receiving the first charging signal output by the first charging device and the at least one second charging signal output by the at least one second charging device comprises:
synchronously receiving the first charging signal when a downlink communication slot between the first charging device and the electronic device starts, and stopping receiving the first charging signal when the first charging device switches to an uplink communication slot.

14. The method according to any one of claims 11 to 13, wherein the first charging device and the electronic device perform signal transmission in the time division duplex manner, and the method further comprises:
receiving a fifth charging signal output by the first charging device after the uplink communication slot between the first charging device and the electronic device, wherein a phase of the fifth charging signal transmitted to the electronic device is the same as a phase of at least one sixth charging signal transmitted to the electronic device; and the at least one sixth charging signal is output by the at least one second charging device.

15. The method according to claim 11, wherein the first charging device and the electronic device perform signal transmission in a frequency division duplex manner; and the step of receiving the first charging signal output by the first charging device and the at least one second charging signal output by the at least one second charging device comprises:
continuously receiving the first charging signal between two communication slots of the first charging device and the electronic device.

16. The method according to claim 11, wherein the first charging device and the electronic device perform signal transmission in a frequency division duplex manner; and the step of receiving the first charging signal output by the first charging device and the at least one second charging signal output by the at least one second charging device comprises:
continuously receiving the first charging signal in an entire transmission period between the first charging device and the electronic device.

17. A charging device, comprising a processor and an antenna, wherein
the processor is configured to obtain battery level information of an electronic device, and output a first charging signal to the antenna in response to the battery level information; and
the antenna is configured to output the first charging signal to the electronic device, wherein a phase of the first charging signal transmitted to the electronic device is the same as a phase of at least one second charging signal transmitted to the electronic device; and the at least one second charging signal is output by at least one second charging device.

18. An electronic device, comprising an antenna, a charging circuit coupled to the antenna, and an energy storage unit coupled to the charging circuit, wherein
the antenna is configured to receive a first charging signal output by a first charging device and at least one second charging signal output by at least one second charging device, wherein a phase of the first charging signal transmitted to the electronic device is the same as a phase of the at least one second charging signal transmitted to the electronic device; and
the charging circuit is configured to charge the energy storage unit based on the first charging signal and the at least one second charging signal.

19. A charging system, comprising a first charging device and an electronic device, wherein
the first charging device is configured to perform the method according to any one of claims 1 to 10; and
the electronic device is connected to the first charging device, and is configured to perform the method according to any one of claims 11 to 16.
